# EUROPÄISCHE PATENTSCHRIFT

(11) **EP 0 877 646 B1**
(45) Veröffentlichungstag und Bekanntmachung des Hinweises auf die Patenterteilung: **05.01.2005**
(21) Anmeldenummer: 97918836.4
(22) Anmeldetag: 12.09.1997
(51) Int. Cl.: B01D 39/00, C08L 1/00

(54) **VERFAHREN ZUR HERSTELLUNG VON WERKSTÜCKEN UND FORMTEILEN AUS ZELLULOSE UND/ODER ZELLULOSEHÄLTIGEM FASERMATERIAL**
PROCESS FOR PRODUCING WORKPIECES AND MOLDED PIECES OUT OF CELLULOSE AND/OR CELLULOSE-CONTAINING FIBER MATERIAL
PROCEDE DE PRODUCTION DE PIECES BRUTES OU DE PIECES MOULEES REALISEES EN CELLULOSE ET/OU DANS UN MATERIAU DE FIBREUX RENFERMANT DE LA CELLULOSE

(30) Priorität: 16.09.1996 AT 162796
(43) Veröffentlichungstag der Anmeldung: 18.11.1998
(73) Patentinhaber: Zellform Gesellschaft m.b.H, 4753 Taiskirchen (AT)
(72) Erfinder: DÖPFNER, Horst, A-4753 Taiskirchen (AT); ERNEGG, Martin, A-4742 Pram (AT); BRAMSTEIDL, Robert, A-4084 St. Agatha (AT)
(74) Vertreter: Pawloy, Peter Michael, Dipl.-Ing.
(86) Internationale Anmeldenummer: PCT/AT1997/000200
(87) Internationale Veröffentlichungsnummer: WO 1998/011973

(56) Entgegenhaltungen:
- EP-A- 0 246 588
- WO-A-87/05956
- WO-A-94/15766
- CH-A- 254 243
- DE-A- 3 808 207
- DE-A- 4 027 786
- DE-A- 4 402 318
- GB-A- 2 066 145
- US-A- 4 474 949

## Beschreibung

Die vorliegende Erfindung betrifft ein Verfahren zur Herstellung von Rohlingen oder Formkörpern aus Zellulosefasern, wobei zellulosehältige Fasern mit Wasser versetzt und zerkleinert werden,

Insbesondere betrifft die vorliegende Erfindung ein Verfahren zur Herstellung von Rohlingen oder Formkörpern mit ähnlichen Eigenschaften wie Holz aus zellulosehältigen, faseraufweisenden Rohstoffen, wie beispielsweise reiner Zellulose, aber auch Rohfasern bzw. der ganzen Pflanze oder anderer Bestandteile von Hanf, Flachs, Schilf, Baumwolle, Stroh, etc., sowie Altpappen und Altpapiere, bzw. Mischungen der hier genannten Rohstoffen, sowie diverse Verwendungen dieser Mikrofaserbreie als Bindemittel bzw. Matrixwerkstoff zur Aufnahme von Füllstoffen. Unter dem Begriff "Zellulosefasern", wie er hier verwendet wird, ist zellulosehältiges Fasermaterial aus Rohstoffen wie z.B. Hanf, Flachs, Schilf, Baumwolle, Stroh (als Rohfasern oder als ganze Pflanze), Altpappe oder Altpapier sowie Mischungen hievon zu verstehen.

Zielsetzung ist die wirtschaftliche Herstellung der angesprochenen Werkstoffe, Körper und Formteile guter technischen Eigenschaften möglichst nach ökologischen Kriterien.

In CH-254 243-B, DE-42 07 233-A1, EP-0 402 866-A2, US-3 935 924-A1 sowie GB-2 066 145-A1 wird jeweils geschlagene Zellulose bzw. Mikrozellulosebrei zur Verwendung als Bindemittel, Filter, Lautsprechermembran, oder als Eindicker und Verstärker von Papierprodukten vorgeschlagen.

Das in CH-254 243-B vorgeschlagene Verfahren bedingt jedoch extrem lange, unwirtschaftliche Aufbereitungszeiten und der daraus entstehende gallertartige Schleim weist eine sehr schwer entwässerbare Konsistenz auf. Darüber hinaus können nach diesem Verfahren höhere Dichten und Festigkeiten nur unter Anwendung von Druck (mindestens 4 kg/cm²) und Hitze (über 100 C°) gewonnen werden.

Grundsätzlich werden auf Basis dieses Schweizer Patentes und anderer bereits bekannter Verfahren wesentlich geringere Festigkeiten erreicht als nach dem erfindungsgemäßen Verfahren.

So wird in DE-42 07 233-A1 Altpapier geschlagen oder gerührt und nach Einbringung mit Luft zu Filterkörpern niedriger Festigkeit getrocknet. Zwingend ist hier eine Beaufschlagung des Faserbreies mit Kalziumoxid-Pulver vorgesehen, um durch Nachhärtung überhaupt Festigkeit und Beständigkeit des Filterblocks zu erhalten. Das in diesem Dokument auch vorgeschlagene Einbringen von Luft in den Faserbrei bezieht sich auf ein offensichtlich kaum aufbereitetes Basismaterial mit äußerst geringen Bindungseigenschaften.

Generell definiert das Wort "Mikrozellulose" für sich allein gesehen weder den Grad der Kürzung, Quetschung, Defibrillierung und Hydratisierung, noch die eingestellte Fraktionszusammensetzung der Fasern, die für die inneren Vernetzungs-, Verfilzungs- und Bindungseigenschaften ausschlaggebend sind. Bezeichnenderweise wird die Feinheit in EP-0 402 866-A2 auch nicht über diese Bindungseigenschaften angesprochen, sondern über die Filtereigenschaften des Materials, ob also bespielweise das Material fein genug eingestellt ist um gewisse Partikel (etwa Bakterien etc.) am Filterdurchgang zu hindern.

Ein weiterer Beleg dafür, daß die Funktion der Verfeinerung sowohl einem anderen Zweck dient als auch qualitativ und quantitativ völlig unterschiedlich hervorgerufen wird, ist die Tatsache, daß für die Filter gemäß der EP-0 402 866-A2 auch die Verwendung von Polymeren als Rohmaterial vorgeschlagen wird, die Aufbereitung also eindeutig nicht der Erhöhung von Wasserstoffbrückenbindungen zwischen den Fasern dient.

Auch in der US-3 935 924-A1 wird lediglich kohlefaserverstärktes Feinpapier mit etwas erhöhten Bindeeigenschaften zur Lautsprechermembranherstellung geoffenbart.

In allen genannten Dokumenten des Standes der Technik wird ausschließlich reine Zellulose, nicht aber billige Rohfasern oder andere Pflanzenteile verwendet. Refiner werden zur Kürzung von Zellulosefasern herangezogen, um Prozesstauglichkeit für die weitere Aufbereitung z.B.: in einem "high pressure homogenizer" zu erreichen. Dieser Hochdruckaufschluß in einer Expansionsdüse bedingt völlig anderen Fraktionszusammensetzungen und Defibrillationsgrade, auch gemäß der GB-2 066 145-A1. Der nach diesem Verfahren hergestellte Brei hat wesentlich geringere Bindungseigenschaften. Bezeichnenderweise wird der Brei auch lediglich zur Verstärkung von Papier, nicht aber zur Bindung von Holzersatzprodukten, wie etwa Möbelplatten, oder als Kunststoffersatz vorgeschlagen. Eine wie in Tabelle IX dieser Patentschrift vorgeschlagene Zugabe um 40% hochaufbereitetem Mikrofaserbrei, gemäß der vorliegenden Erfindung hergestellt, würde dem Papier Eigenschaften eines Holzfurniers verleihen, also viel zu hart für Papier, spröde und in dieser Funktion unbrauchbar.

In EP-0 246 588 ist ein Verfahren zur Herstellung leichter, binde mittel freder und umwelt freundlicher Formkörper aus lignozellulosehaltigem Material beschrieben. Hierbei wird jedoch Zerkleinertes mit defibriertem lignozellulose haltigen Material gemischt.

Gemäß der vorliegenden Erfindung ist nun vorgesehen, daß in einem Verfahren zur Herstellung von Rohlingen oder Formkörpern aus Zellulosefasern, wobei zellulosehältige Fasern mit Wasser versetzt und zerkleinert werden, ohne vorhergehenden chemischen Behandlungsschritt in den Faserbrei eine Mahlleistung eingebracht wird, der so erhaltene wässerige Mikrofaserbrei zu einem Rohling oder Formkörper geformt und anschließend getrocknet wird, wobei der gebildete Rohling oder Formkörper drucklos und bindemittelfrei aushärtet. Das anhaltende Mahlen, Zerkleinern und Defibrillieren der Zellulosefaser oder zellulosehaltigen Faser erfolgt beispielsweise in einem Refiner, wobei bei einem Laborrefiner vom Typ RO-Escherwys ein Gesamtenergieaufwand von mindestens 0,5 kWh/kg idealerweise jedoch 2 - 2 , 5 kWh/kg notwendig ist. Zur Ermittlung der Mahlleistung muß die Leerlaufleistung ermittelt und von der Gesamtenergieaufnahme abgezogen werden. Bei Benützung von Maschinen höherer Leistung oder bei Verwendung anderer geeigneter Faserzerkleinerungs- und Defibrillierungsgeräte ergibt sich natürlich ein anderes Verhältnis von Leerlaufleistung zu Mahlleistung, die erfindungsgemäß wesentliche Aufnahme einer Mahlleistung, die dem Gesamtenergieaufwand von mindestens 0,5 kWh/kg idealerweise jedoch 2-2,5 kWh/kg, eines Laborrefiner vom Typ RO-Escherwys entspricht, muß erreicht werden. Erst dadurch entsteht ein formbarer Mikrofaserbrei verschiedenster Faserlängen und kleinster Fibrillengrößen, der die Eigenschaft besitzt, ohne Zugabe von Klebstoffen oder ehem. Hilfsmitteln und ohne Anwendung von Druck, nur durch Trocknung und der damit verbundenen Schrumpfung, zu einem ökologischen, nachverformbaren Faserwerkstoff hoher Dichte (bis zu einem spezifischen Gewicht von 1,5) und Festigkeit auszuhärten.

Gegenüber dem Stand der Technik läßt das erfindungsgemäße Verfahren für die angestrebten Anwendungen eine wirtschaftliche Umsetzung zu, sowohl was den Aufwand bei der Aufbereitung betrifft, als auch bei den Möglichkeiten der Rohstoffwahl, der Entwässerungszeiten sowie der vorgeschlagenen Verfahrenswege zur Produktumsetzung, Darüber hinaus bedingt der nach diesem Verfahren hergestellte Mikrofaserbrei Werkstücke mit Festigkeitswerten, die bei geeigneter Rohstoffwahl und entsprechender Aufbereitung, ohne jede Anwendung von Binde- oder Zuschlagsmitteln oder äußeren Drücken, jene von Harthölzern übertreffen können und auf diese Weise spezifische Gewichte von bis zu 1,5 erreichen. Auch die leichten und porösen Varianten verfügen über ausgezeichnete Festigkeitswerte.

Für die Durchführung des Verfahrens der vorliegenden Erfindung ist ein Zusatz von Bindemittel nicht erforderlich, ein derartiger Zusatz kann die Festigkeit der Faserstruktur zwar nicht wesentlich erhöhen, die Gesamtfestigkeit kann jedoch positiv beeinflußt werden.

Gemäß einer bevorzugten Ausführungsform des erfindungagemäßen Verfahrens ist vorgesehen, daß der wässerige Microfaserbrei unter Druck vorentwässert und zu einem Rohling oder Formkörper geformt und anschließend getrocknet wird, wobei der gebildete Rohling oder Formkörper drucklos und bindemittelfrei aushärtet. Nach der Mahlung angewandte äußere Drücke und Kräfte dienen vor allem der rascheren Vorentwässerung, der Formung und dem in Form halten und sind keine Prämisse zum Erreichen hoher Festigkeiten des Werkstoffes.

Vorzugsweise wird der wässerige Microfaserbrei nach der Formgebung gefroren, sodaß bei der anschließenden Trocknung der gebildete Rohling oder Formkörper eine poröse, lufthaltige, leichte Struktur aufweist. Alternativ bzw. zusätzlich hiezu ist auch günstig, wenn in den wässerigen Microfaserbrei vor der Formgebung Gasbläschen eingebracht werden, etwa durch Einschluß von Luft oder anderen Gasen bzw. Gasgemischen, Beimischen von Treibmitteln oder Gärprozesse, sodaß der gebildete Rohling oder Formkörper eine poröse, luft- bzw. gashaltige, leichte Struktur aufweist. Das Werkstoffgewicht kann vom spezifischen Gewicht der Zellulose selbst (ca. 1,5 ) durch einen derartigen Einschluß von Luft- oder anderen Gasbläschen, aber auch generell durch Einschluß von leichten Zuschlagstoffen kontinuierlich herabgesetzt werden. Dies ist möglich bis eine Leichtigkeit, die unterhalb der von Verpackungsstyropor liegt, erreicht ist. Das Spektrum von Dichte und Festigkeit reicht also von Werten, die etwa bei glasfaserverstärkten Kunststoffen liegen, über holz-ähnliche Eigenschaften (in einem Bereich zwischen harten Tropenhölzer und Balsaholz), bis zu hochporösen Leichtmaterialien mit sehr guter Isolierfähigkeit. Der GaseinschluB kann durch verschiedene Arten von Schäumen (Verwirbelung oder Injektion von Luft durch Düsen oder ähnliche Einrichtungen), Beigabe von Treibmitteln, Gärung u.a. mehr, aber auch durch (teilweises) Sperren des Schrumpfungsprozesses mit Hilfe von Armierungen, durch unvollständiges Aufmahlen des Faserbreies, durch das erwähnte Gefrierverfahren, Überhitzen etc. erreicht werden. Der Übergang von diesen Leichtwerkstoffen zum dichten Hartwerkstoff wird dabei durch Variation von Mengen- und/oder Trocknungstemperaturparametern beim Gefrieren, gegebenenfalls auch bei der Trocknung, kontinuierlich gestaltet.

Nach einer bevorzugten Ausführungsform ist vorgesehen, daß der wässerige Microfaserbrei einen Trockengehalt an Microfasern von 1 bis 15 %-Masse aufweist. Ein derartiger Trockensubstanzgehalt an Mikrofaser eignet sich vorzüglich zum Pumpen in wasserdurchlässige Formen.

Vorzugsweise enthält der wässerige Microfaserbrei auch Zusatzstoffe, welche beispielsweise ausgewählt sind aus der Gruppe bestehend aus Armierungsmittel, wie Langfasern, Gaseinschlüsse, Feuerschutzmittel, wie Silikate, Farbstoffe, wie Pigmente, Gleitmittel, wie Graphit, Wärmedämmstoffe, Isolierstoffe, Füllstoffe und Mittel zur Erhöhung der elektrischen Leitfähigkeit, wie Graphit, sowie Kombinationen hievon. Zusatz- und Füllstoffe können durch einfaches Beimischen (am besten bei niederen Stoffdichten) vor oder nach der Mahlung, wobei auf sorgfältige Verteilung zu achten ist, in jedem Fall aber vor Beendigung der Trocknung zugefügt werden. Über die verschiedensten Füllstoffe, die in die Matrix des Grundwerkstoffs aus Mikrofasern eingebaut werden können, aber auch über die Rohstoffwahl lassen sich unterschiedlichste Werkstoffeigenschaften bedingen: So können etwa zur Brandhemmung Silikate zugefügt werden, zur Erhöhung mechanischer Gleitfähigkeit, aber auch elektrischer Leitfähigkeit eignet sich Grafit, über Farbstoffe kann die ästhetische Wertigkeit variiert und erhöht werden, der Werkstoff kann schwerer oder leichter, isolierend oder gut wärmeleitend usw. gestaltet werden. über die Mengenverhältnisse dieser Stoffbeimengungen werden die gewünschten Werkstückeigenschaften erzielt.

Günstig ist auch, wenn als Ausgangsmaterial eine Mischung von Zellulosefasern unterschiedlichen Mahlgrades eingesetzt wird. Über Variationen der eingesetzten Faserrohstoffe, der Mengen an Mahlenergie und der gewählten Mahlwerkzeuge aber auch über die verwendeten Methoden für Vorentwässerung, Formung und Trocknung können sowohl Festigkeiten und Werkstoffdichten als auch strukturelle Faseranordnungen der Werkstücke gesteuert werden. Auch können die als Rohstoff verwendeten Pflanzen oder Fasern in verschiedensten Mengenanteilen mehr oder minder aufbereitet werden und Teile davon (höher aufbereitete) als Bindemittel fungieren, andere (minder aufbereitete) als Armierung und Entwässerungsfilz. Über Mengenanteile, den jeweiligen Aufbereitungsgrad sowie durch die mechanisch herbeigeführte Annäherung der Faserteilchen vor Beginn der Trocknung können Festigkeit, spezifisches Gewicht, Isolationswert und andere technische Eigenschaften eingestellt werden.

Gemäß einer weiteren bevorzugten Ausführungsform des erfindungsgemäßen Verfahrens ist vorgesehen, daß der wässerige Microfaserbrei z.B. durch Pumpen, Pressen, Stanzen oder Walzen in Formen gebracht wird und gegebenenfalls nach einer Zwischentrocknung ein- oder mehrmals nachgeformt oder -geprägt wird. Mikrofaserbreie können in starre, undurchlässige bzw. wasserdurchlässige Formen gepreßt, gestanzt oder gewalzt bzw. gepumpt werden. Um maßgenaue Produkte herzustellen, kann beispielsweise folgender Verfahrensablauf gewählt werden: Pumpen des Mikrofaserbreis in wasserdurchlässige Formen, dann Erhöhen der Stoffdichte im Rohling bzw. in der Platte durch einfache Trocknung erhöhen, anschließend Pressen, Stanzen oder Walzen des vorentwässerten Rohlings in Formen. Dieser Schritt kann je nach gewünschter Maßgenauigkeit bei fortschreitender Trocknung in, der Schrumpfung entsprechend verkleinerten Formen, auch mehrmals wiederholt werden.

Günstig ist auch, wenn
- der wässerige Microfaserbrei durch Vorentwässerung bzw. Abpreßen zu Platten geformt bzw. bereits vorentwässert in entsprechender Form stranggepreßt wird und anschließend, gegebenenfalls unter Walzung, getrocknet wird,
- der wässerige Microfaserbrei durch Vorentwässerung bzw. Abpreßen zu Profilen geformt bzw. bereits vorentwässert in entsprechender Form stranggepreßt wird und anschließend, gegebenenfalls unter Walzung getrocknet wird, bzw.
- der wässerige Microfaserbrei um einen Dorn als Trocknungslehre geformt bzw. bereits vorentwässert auf einen Dorn positioniert und anschließend getrocknet wird.

Bei niederen Stoffdichten können Platten, Profile und dergleichen mehr in kontinuierlichen Fertigungsstrassen, mit einer Vorentwässerungsstrecke und/oder anschließender Trocknungsstrecke, aber auch in Chargen, erzeugt werden. Auch Strangpressen, die von höheren Stoffdichten ausgehen führen zum gewünschten Ergebnis.

Für Hohlkörper, insbesondere größere Hohlkörper, empfiehlt sich ein Dorn, der in dem Rohling positioniert wird und ihn während der Trocknung in Form hält. Auf diese Weise können Gehäuse und Behältnisse aller Art, von der Filmdose bis zum Möbelstück, gefertigt werden.

Allgemein kann beim erfindungsgemäßen Verfahren die Formung auch in mehreren Schritten geschehen, wobei zwischen den einzelnen Formschritten weitere Entwässerungsschritte vorgesehen sein können, sodaß auch komplizierte Gegenstände formgenau herstellbar sind.

Vorzugsweise wird nach dem erfindungsgemäßen Verfahren der getrocknete Rohling oder Formkörper nochmals befeuchtet und anschließend endgeformt. Der Werkstoff läßt sich nach der Trocknung und erneuter Befeuchtung nachverformen, wobei trockene Platten, bzw. Formrohlinge mehrere Stunden bis Tage (abhängig von der Dicke und der erwünschten Größe der Verformung) in einer Klimakammer mit wasserdampfgesättigter Luft - eventuell auch durch direktes Wasserbad - wiederbefeuchtet werden. Der Werkstoff nimmt dabei Wasser auf und wird plastisch, biegsam und verformbar. Er läßt sich mit geeigneten Vorrichtungen formen, biegen, prägen, walzen oder stanzen. Durch einfache Trocknung härtet der Formling danach zur vorigen Dichte, Festigkeit und Härte aus.

Zur Erzeugung von Halbzeug kann vorzugsweise die Trocknung beendet werden während der Rohling oder Formkörper noch einen plastischen Zustand aufweist.

Der erfindungsgemäß erhältliche Microfaserbrei kann als Kleb- bzw. Bindemittel, beispielsweise zur Bindung von Faserplatten, Spanplatten, Papier oder Hartkartonagen, oder zur Härtung bzw. Beschichtung der Oberflächen von geeigneten Trägern, wie Kartonagen, Leichtwerkstoffen u. dgl. verwendet werden.

Festigkeit, Härte und Formbarkeit des Werkstoffes nehmen mit anwachsender Verfeinerung der Zellulosefaserstruktur zu. Allerdings kann bei extremer Faserzerkleinerung eine Armierung mit längeren Fasern (Zugabe von vorzugsweise unter 15 % Trockensubstanz) die Festigkeit noch weiter erhöhen. Größte Festigkeiten lassen sich durch extrem fein gemahlenen Mikrofaserbrei, der von einem dünnen Netz von Fasern verschiedenster Länge in ausgewogener Faser längenverteilung armiert ist, erzielen. Dabei sorgt der extrem fein vermahlene Mikrofaserbrei für gute Bindungs - aber auch gute Fluß - und damit Formungseigenschaften, die Armierung verteilt Druck-, Zug- oder Scherkräfte auf größere Bereiche und verhindert kurzen Bruch auf kleiner Fläche.

Die plastischen Eigenschaften des Mikrofaserbreis sind direkt von dessen Wassergehalt abhängig.

Alle aus dem erfindungsgemäß erhältlichen Mikrofaserbrei erhältlichen "Sekundärwerkstoffe", die durch Beimengungen, Rohstoffwahl und Prozessvariationen in oben angeführter Weise hergestellt werden können, sind ebenfalls durch die vorliegende Erfindung mitumfaßt.

### Beispiel 1

Hanffaser wird in wässriger Lösung (8 % Trockensubstanz) so lange gemahlen, bis der Mikrofaserbrei puddingartige Konsistenz aufweist. Dieser Mikrofaserbrei wird in durchlässige Formen gepumpt und auf 25 % Trockensubstanz entwässert. Der erhaltene Formkörper wird anschließend auf 60 % Trockensubstanz getrocknet um danach in einer entsprechenden Prägeform seine Gestalt zu erhalten.

### Beispiel 2

Hanfstroh wird nach Kürzung zur Prozeßtauglichkeit in wässriger Lösung (6 % Trockensubstanz) so lange gemahlen, bis ein puddingartiger Stoff entsteht. Dieser wird (gegebenenfalls nach Vorentwässerung und/oder fortfahrender Walzung) zu Platten mit 75 bis 90 % Trockensubstanz getrocknet. Anschließend wird die Platte entweder für direkte Plattenanwendung fertiggetrocknet oder es werden mit einfachen Stanz- bzw. Prägewerkzeugen aus dieser Platte Brillen, Wegwerfgeschirr und -besteck, Schalen. Kassetten, Relieftüren etc. gefertigt.

### Beispiel 3

Zellulose oder Altpapier wird in wässriger Lösung (5 % Trokkensubstanz) so lange gemahlen, bis ein puddingartiger Mikrocellulosefaserbrei entsteht. Dieser Brei wird in eine durchlässige Form, in der sich ein Trockendorn befindet, gepumpt und kurz entwässert. Nach erfolgter Trocknung am Dorn erhält der Rohling, mit ca. 80 % Trockensubstanz, in einer Metallform seine endgültige Gestalt.

### Beispiel 4

Baumwollnachschnitt wird in wässriger Lösung (7 % Trockensubstanz) so lange gemahlen, bis Mikrofaserpudding entsteht. Dieser wird zu einer dicken Platte geformt und anschließend bei ca. - 20° C gefroren. Dann wird auf Ober- und Unterseite der wieder aufgetauten Platte eine dünne Schicht ungefrorenen Mikrofaserbreis aufgetragen, und das Formstück, welches zwecks Formstabilität zwischen luftdurchlässige Gitter gespannt wird, bei 40 - 60° C getrocknet. Die so entstandene Mehrschichtplatte ist leicht, gut isolierend, zugleich auch fest und besitzt harte Oberflächen.

### Beispiel 5

50 % Hanffaser, 48 % Hanfzellulose und 2 % Erdpigment werden in wässriger Lösung (8 % Trockensubstanz) solange gemahlen, bis ein puddingartiger Faserbrei entsteht. Dieser Faserbrei wird nun abwechselnd mit einer Lage Hanffasern (Faserlänge 1,0 bis 30,0 cm, 10 % der Gesamttrockensubstanz) schichtweise auf eine kugelförmige Parafinform aufgetragen. Nach erfolgter Trocknung und der damit verbundenen Aushärtung wird der Formteil aufgebohrt und der Paraffinkörper durch Erwärmung ausgeschmolzen und entfernt. Auf diese Weise können Hohlkugeln und ähnliche Formteile erzeugt werden.

### Beispiel 6

Hanfstroh oder Hanfschäben werden prozesstauglich gekürzt, anschließend wird 1/3 der Pflanzenmasse hochaufbereitet, 1/3 mäßig aufbereitet, 1/3 lediglich leicht defibrilliert und alle Anteile danach wieder homogen durchmischt. Das erste Drittel bildet die "Klebstoffmatrix", das zweite Drittel einen "Vernetzungs- und Entwässerungsfilz", das dritte Drittel dient als "Sperr- und Füllstoff" sowie als Armierung. Durch Erhöhung der hochaufbereiteten Anteile wird der Werkstoff holzartig, fester und dichter, durch Reduktion des Aufbereitungsgrades bzw. der hochaufbereiteten Mengenanteile wird der Werkstoff hingegen leicht, porös sowie wärme- und schalldämmend.

Bei der Schäbenvariante sind kaum Langfaseranteile vorhanden, sie können bei etwaigem Armierungsbedarf zu nicht allzu hohen prozentuellen Anteilen zugefügt werden.

## Patentansprüche

1. Verfahren zur Herstellung von Rohlingen oder Formkörpem aus Zellulosefasern, wobei zellulosehältige Fasern mit Wasser versetzt und zerkleinert werden, **dadurch gekennzeichnet, dass** ohne vorhergehenden chemischen Behandlungsschritt in den Faserbrei mindestens eine Mahlleistung die dem Gesamtenergieaufwand von 0,5 kWh/kg eines Laborrefiners vom Typ RO-Escherwys entspricht, eingebracht wird, der so erhaltene wässerige Microfaserbrei zu einem Rohling oder Formkörper geformt und anschließend getrocknet wird, wobei der gebildete Rohling oder Formkörper drucklos und bindemittelfrei aushärtet.

2. Verfahren nach Anspruch 1, **dadurch gekennzeichnet, dass** in den Faserbrei eine Mahlleistung, die dem Gesamtenergieaufwand von 2-2,5 kWh/kg eines Laborrefiners vom Typ RO-Escherwys entspricht, eingebracht wird.

3. Verfahren nach einem der Ansprüche 1 bis 2, **dadurch gekennzeichnet, dass** der wässerige Microfaserbrei unter Druck vorentwässert und zu einem Rohling oder Formkörper geformt und anschließend getrocknet wird, wobei der gebildete Rohling oder Formkörper drucklos und bindemittelfrei aushärtet.

4. Verfahren nach einem der Ansprüche 1 bis 2, **dadurch gekennzeichnet, dass** der wässerige Microfaserbrei nach der Formgebung gefroren wird, so dass bei der anschließenden Trocknung der gebildete Rohling oder Formkörper eine poröse, lufthaltige, leichte Struktur aufweist.

5. Verfahren nach einem der Ansprüche 1 bis 4, **dadurch gekennzeichnet, dass** in den wässerigen Microfaserbrei vor der Formgebung Gasbläschen eingebracht werden, etwa durch Einschluss von Luft oder anderen Gasen bzw. Gasgemischen, Beimischen von Treibmitteln oder Gärprozesse, so dass der gebildete Rohling oder Formkörper eine poröse, luft- bzw. gashaltige, leichte Struktur aufweist.

6. Verfahren nach einem der Ansprüche 1 bis 5, **dadurch gekennzeichnet, dass** der wässerige Microfaserbrei einen Trockengehalt an Microfasern von 1 bis 15 %-Masse aufweist.

7. Verfahren nach einem der Ansprüche 1 bis 6, **dadurch gekennzeichnet, dass** der wässerige Microfaserbrei auch Zusatzstoffe enthält, welche beispielsweise ausgewählt sind aus der Gruppe bestehend aus Armierungsmittel, wie Langfasern, Gaseinschlüsse, Feuerschutzmittel, wie Silikate, Farbstoffe, wie Pigmente, Gleitmittel, wie Graphit, Wärmedämmstoffe, Isolierstoffe, Füllstoffe und Mittel zur Erhöhung der elektrischen Leitfähigkeit, wie Graphit, sowie Kombinationen hiervon.

8. Verfahren nach einem der Ansprüche 1 bis 7, **dadurch gekennzeichnet, dass** als Ausgangsmaterial eine Mischung von Zellulosefasern unterschiedlichen Mahlgrades eingesetzt wird.

9. Verfahren nach einem der Ansprüche 1 bis 8, **dadurch gekennzeichnet, dass** der wässerige Microfaserbrei z.B. durch Pumpen, Pressen, Stanzen oder Walzen in Formen gebracht wird und gegebenenfalls nach einer Zwischentrocknung ein- oder mehrmals nachgeformt oder -geprägt wird.

10. Verfahren nach einem der Ansprüche 4 bis 9, **dadurch gekennzeichnet, dass** der wässerige Microfaserbrei durch Vorentwässerung bzw. Abpressen zu Platten geformt bzw. bereits vorentwässert in entsprechender Form stranggepresst wird und anschließend, gegebenenfalls unter Walzung, getrocknet wird.

11. Verfahren nach einem der Ansprüche 4 bis 9, **dadurch gekennzeichnet, daß** der wässerige Microfaserbrei durch Vorentwässerung bzw. Abpreßen zu Profilen geformt bzw. bereits vorentwässert in entsprechender Form stranggepreßt wird und anschließend, gegebenenfalls unter Walzung getrocknet wird.

12. Verfahren nach einem der Ansprüche 4 bis 9, **dadurch gekennzeichnet, dass** der wässerige Microfaserbrei um einen Dorn als Trocknungslehre geformt bzw. bereits vorentwässert auf einen Dorn positioniert und anschließend getrocknet wird.

13. Verfahren nach einem der Ansprüche 1 bis 12, **dadurch gekennzeichnet, dass** der getrocknete Rohling oder Formkörper nochmals befeuchtet und anschließend endgeformt wird.

14. Verfahren nach einem der Ansprüche 1 bis 13, **dadurch gekennzeichnet, dass** die Trocknung beendet wird während der Rohling oder Formkörper noch einen plastischen Zustand aufweist.

15. Verwendung eines Microfaserbreis erhältlich durch ein Verfahren nach einem der Ansprüche 1 bis 3 als Kleb- bzw. Bindemittel, beispielsweise zur Bindung von Faserplatten, Spanplatten, Papier oder Hartkartonagen.

16. Verwendung eines Microfaserbreis erhältlich durch ein Verfahren nach einem der Ansprüche 1 bis 3 zur Härtung bzw. Beschichtung der Oberflächen von geeigneten Trägern, wie Kartonagen, Leichtwerkstoffen u. dgl..

## Claims

1. A process for producing blanks or moulded bodies from cellulose fibers, wherein cellulose-containing fibers are admixed with water and chopped, **characterised in that** without a previous chemical treatment step, at least one grinding action is introduced into the fiber pulp, which grinding action corresponds to the total energy expenditure of 0.5 kWh/kg of a laboratory refiner of the RO-Escherwys type, the water-containing microfiber pulp obtained in this way is formed into a blank or a moulded body and subsequently dried, wherein the blank or moulded body formed hardens unpressurised and without a bonding agent.

2. A process according to claim 1, **characterised in that** a grinding action corresponding to the total energy expenditure of 2-2.5 kWh/kg of a laboratory refiner of the RO-Escherwys type is introduced into the fiber pulp.

3. A process according to any one of claims 1 to 2, **characterised in that** the water-containing microfiber pulp is pre-drained under pressure and formed to a blank or moulded body and subsequently is dried, wherein the blank or moulded body formed hardens unpressurised and without a bonding agent.

4. A process according to any one of claims 1 to 2, **characterised in that** the water-containing microfiber pulp is frozen after having been shaped so that during the subsequent drying, the blank or moulded body formed has a porous, air-containing, light-weight structure.

5. A process according to any one of claims 1 to 4, **characterised in that** gas bubbles are introduced into the water-containing microfiber pulp prior to shaping, such as by the inclusion of air or other gases or gas mixtures, respectively, the admixture of expanding agents or by fermenting processes, so that the blank or moulded body formed has a porous, air- or gas-containing, light-weight structure.

6. A process according to any one of claims 1 to 5, **characterised in that** the water-containing microfiber pulp has a dry content of microfibers of from 1 to 15 % by mass.

7. A process according to any one of claims 1 to 6, **characterised in that** the water-containing microfiber pulp also contains additives which, for instance, are selected from the group consisting of reinforcing agents, such as long fibers, gas inclusions, fire-proofing agents, such as silicates, colouring agents, such as pigments, gliding agents, such as graphite, heat-insulating materials, insulating materials, fillers and agents for increasing the electric conductivity, such as graphite, as well as combinations thereof.

8. A process according to any one of claims 1 to 7, **characterised in that** a mixture of cellulose fibers of varied degrees of grinding are used as the starting material.

9. A process according to any one of claims 1 to 8, **characterised in that** the water-containing microfiber pulp is formed into shapes, e.g. by pumping, pressing, punching or rolling and, optionally after an intermediate drying, is reshaped or restamped once or several times.

10. A process according to any one of claims 4 to 9, **characterised in that** the water-containing microfiber pulp is formed into boards by prior drainage or by squeezing, respectively, or after having already previously been drained, respectively, is extruded in the respective shape, and subsequently dried, optionally under rolling.

11. A process according to any one of claims 4 to 9, **characterised in that** the water-containing microfiber pulp is formed into profile sections by prior drainage or by squeezing, respectively, or after having already previously been drained, respectively, is extruded in the respective shape, and subsequently dried, optionally under rolling.

12. A process according to any one of claims 4 to 9, **characterised in that** the water-containing microfiber pulp is shaped around a mandrel as a drying mould or is positioned on a mandrel after having previously been drained and subsequently is dried.

13. A process according to any one of claims 1 to 12, **characterised in that** the dried blank or moulded body is wetted again and subsequently is formed in its final shape.

14. A process according to any one of claims 1 to 13, **characterised in that** drying is terminated while the blank or moulded body still has a plastic state.

15. The use of a microfiber pulp obtainable by a process according to any one of claims 1 to 3 as an adhesive or bonding agent, respectively, e.g. for the bonding of fiber boards, particle boards, paper or stiff cardboard articles.

16. The use of a microfiber pulp obtainable by a method according to any one of claims 1 to 3 for the hardening, or coating, respectively, of surfaces of suitable carriers, such as cardboard articles, light-weight materials and the like.

## Revendications

1. Procédé de production d'ébauches ou de corps moulés à partir de fibres de cellulose, dans lequel des fibres contenant de la cellulose sont mélangées avec de l'eau et fragmentées, **caractérisé en ce que** l'on apporte à la pâte de fibres, sans étape de traitement chimique préalable, au moins une énergie de broyage (qui correspond à une dépense d'énergie totale de 0,5 kWh/kg d'un affineur de laboratoire du type RO-Escher-Wyss), **en ce que** l'on met la pâte de microfibres aqueuse ainsi obtenue en forme d'ébauche ou de corps moulé et ensuite on la fait sécher, l'ébauche ou le corps moulé formé(e) durcissant sans pression ni liant.

2. Procédé selon la revendication 1, **caractérisé en ce que** l'on apporte à la pâte de fibres une énergie de broyage (qui correspond à une dépense d'énergie totale de 2 à 2,5 kWh/kg d'un affineur de laboratoire du type RO-Escher-Wyss).

3. Procédé selon l'une des revendications 1 et 2, **caractérisé en ce que** l'on déshydrate préalablement la pâte de microfibres aqueuse sous pression et on la met en forme d'ébauche ou de corps moulé et ensuite on la fait sécher, l'ébauche ou le corps moulé formé(e) durcissant sans pression ni liant.

4. Procédé selon l'une des revendications 1 et 2, **caractérisé en ce que** l'on congèle la pâte de microfibres aqueuse après la mise en forme, de sorte que lors du séchage qui suit l'ébauche ou le corps moulé formé(e) présente une structure légère poreuse contenant de l'air.

5. Procédé selon l'une des revendications 1 à 4, **caractérisé en ce que** l'on introduit des bulles de gaz dans la pâte de microfibres aqueuse avant la mise en forme, par exemple par inclusion d'air ou d'autres gaz ou mélanges gazeux, par mélange d'agents propulseurs ou par des processus de fermentation, de sorte que l'ébauche ou le corps moulé formé(e) présente une structure légère poreuse contenant de l'air ou du gaz.

6. Procédé selon l'une des revendications 1 à 5, **caractérisé en ce que** la pâte de microfibres aqueuse présente une teneur en matière sèche de microfibres de 1 à 15 % en masse.

7. Procédé selon l'une des revendications 1 à 6, **caractérisé en ce que** la pâte de microfibres aqueuse contient également des additifs qui sont choisis par exemple parmi le groupe constitué par des agents d'armature tels que fibres longues, inclusions de gaz, agents ignifuges, tels que des silicates, colorants, tels que des pigments, lubrifiants, tels que du graphite, isolants thermiques, substances isolantes, substances de charge et agents pour augmenter la conductivité électrique, tels que du graphite, ainsi que des combinaisons de ceux-ci.

8. Procédé selon l'une des revendications 1 à 7, **caractérisé en ce que** l'on utilise à titre de matériau de départ un mélange de fibres de cellulose présentant des degrés de broyage différents.

9. Procédé selon l'une des revendications 1 à 8, **caractérisé en ce que** l'on met en forme la pâte de microfibres aqueuse par exemple par pompage, pressage, poinçonnage ou laminage et on la remet en forme ou on la ré-estampe une ou plusieurs fois le cas échéant après un séchage intermédiaire.

10. Procédé selon l'une des revendications 4 à 9, **caractérisé en ce que** l'on met la pâte de microfibres aqueuse en forme de plaques par déshydratation préalable ou par extraction par pressage, ou bien on la fait extruder en une forme correspondante en étant déjà déshydratée préalablement, et ensuite on la fait sécher le cas échéant par laminage.

11. Procédé selon l'une des revendications 4 à 9, **caractérisé en ce que** l'on met la pâte de microfibres aqueuse en forme de profilés par déshydratation préalable ou par extraction par pressage, ou bien on la fait extruder en une forme correspondante en étant déjà déshydratée préalablement, et ensuite on la fait sécher le cas échéant par laminage.

12. Procédé selon l'une des revendications 4 à 9, **caractérisé en ce que** l'on met en forme la pâte de microfibres aqueuse autour d'un mandrin à titre de gabarit de séchage, ou bien on la positionne sur un mandrin en étant déjà déshydratée préalablement, et ensuite on la fait sécher.

13. Procédé selon l'une des revendications 1 à 12, **caractérisé en ce que** l'on humecte encore une fois l'ébauche ou le corps moulé séché(e) et ensuite on la/le met en forme finale.

14. Procédé selon l'une des revendications 1 à 13, **caractérisé en ce que** l'on termine le séchage lorsque l'ébauche ou le corps moulé présente encore un état plastique.

15. Utilisation d'une pâte de microfibres obtenue par un procédé selon l'une des revendications 1 à 3 à titre d'agent collant ou liant, par exemple pour lier des plaques de fibres, des panneaux d'agglomérés, du papier ou des cartonnages durs.

16. Utilisation d'une pâte de microfibres obtenue par un procédé selon l'une des revendications 1 à 3 pour le durcissement ou le revêtement des surfaces de supports appropriés, tels que des cartonnages, des matériaux légers et similaires.
